# EUROPEAN PATENT APPLICATION

(11) **EP 0 713 032 A2**
(43) Date of publication of application: **22.05.1996**
(21) Application number: 95830481.8
(22) Date of filing: 15.11.1995
(51) Int. Cl.: F16H 25/20, E05F 15/10

(54) **An electromechanical linear actuator for driving wing closing systems**

(30) Priority: 15.11.1994 IT BO940190
(71) Applicant: APRIMATIC S.p.A., I-40059 Medicina (Bologna) (IT)
(72) Inventor: Generali, Gianni, I-40055 Castenaso (Bologna) (IT)
(74) Representative: Lanzoni, Luciano

(57) **Abstract**

An electromechanical linear actuator for driving closing systems in which a mobile wing turns about an axis relative to a fixed support, the actuator consisting of a main body (2) with, on one side, means (21) for its connection to the said fixed support and, on the other side, transmission means (3) of variable length, including a tube which rotates about its own longitudinal axis, with screws which act upon an element for connection to the said wing, the wing being mobile with respect to the actuator main body (2) between two end positions; said actuator also having drive means (4) which drive the transmission means (3); the drive means (4) have a transmission shaft (41), set at a right angle to the longitudinal axis (X) of the tube (31) and meshed to the tube by means of a first (41') and second (31') toothed wheel, keyed respectively to the transmission shaft and the rotating tube; the other end of the transmission shaft (41) has keying means (44) which can be detached from the drive means (4).

## Description

The present invention relates to an electromechanical linear actuator for driving wing closing systems such as doors, street doors, gates, etc.

In such closing systems, one or two wings are made to rotate about a vertical axis which defines a pivot for a structure which may be represented by a door, a street door or a gate.

Linear actuators are used to drive doors, street doors and gates, that is to say, actuators with at least one element whose length may vary depending whether the wing is open or closed.

Two types of such elements are currently available: with hydraulic or electromechanical control.

The solution which envisages a hydraulic actuator is generally preferred for driving very heavy street doors and gates. However, the disadvantage of this solution is the complexity of the elements and their cost, generally higher than for the electromechanical actuator solution. For example, the following elements are required: a hydraulic pump, hoses, control boxes, by-pass valves, drive speed control and seals.

Moreover, it is difficult to obtain constant performance depending on the outside temperature, since the oil used is significantly and negatively affected by climatic changes.

For these reasons, the solutions involving electromechanical actuators are considered more suitable, at least for driving relatively light gates and street doors.

The present invention is an electromechanical actuator.

Electromechanical actuators are generally more simple from the point of view of design and construction, they are more economical and require less maintenance.

The actuators currently used normally consist of an electric motor with an epicyclical reduction gear keyed to the motor shaft, there being a worm screw connected to the reduction gear outlet. The worm screw is connected to an external bushing with an eyelet designed to act as a mobile element, whose distance from a fixed eyelet varies, said fixed eyelet being secured to the distal section of the motor - assembly.

The solutions currently produced have a single housing for all motor - actuator components; the housing is assembled during production, so that any defects or faults in some part of the device, for example, the motor or the worm screw, necessitate the substitution of the entire unit rather than allowing immediate on-site repairs.

The aim of the present invention is to overcome the afore-mentioned disadvantages with a linear actuator with a modular construction, designed to provide a corresponding modularity when individual parts require repairs or substitution.

The present invention relates to an electromechanical linear actuator for driving wing closing systems, of the type which may be used on doors or gates with a wing which turns about a vertical axis with respect to a fixed support which is the supporting element for the wing. The actuator includes a main body with, on one side, means for its connection, by a pivot, to the fixed support and, on the other, linear transmission means of variable length, including a tube which rotates about its own longitudinal axis and has a screw which acts upon an element for connection to the wing, the latter being mobile relative to the actuator main body between two end positions corresponding to the maximum extension - wing closed position, and minimum extension - wing open position; said actuator also having drive means which drive the transmission means, and being characterised in that the said drive means also have a transmission shaft, freely pivoted to the actuator main body, set at a right angle to the longitudinal axis of the tube and meshed to the tube by means of a first and second toothed wheel, keyed respectively to the transmission shaft and rotating tube, the opposite end of the transmission shaft having keying means which may be detached from the drive means located above the actuator main body and parallel with the longitudinal axis of the tube.

The technical features of the present invention, in accordance with the said aims, are clearly described in the claims herein and the advantages of the invention are more clearly shown in the detailed description below, with reference to the accompanying drawings which illustrate an embodiment by way of example only, and in which:

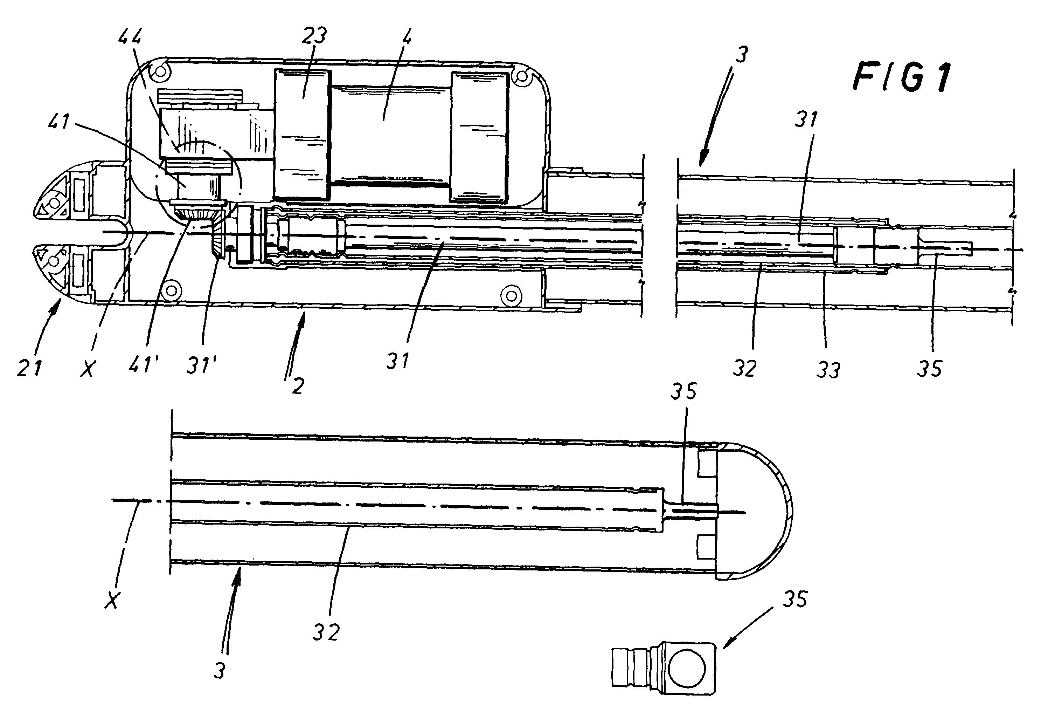

- figure 1 is a side view of an embodiment of the present invention with some parts cut away to better view others, and with a plan view of a detail;

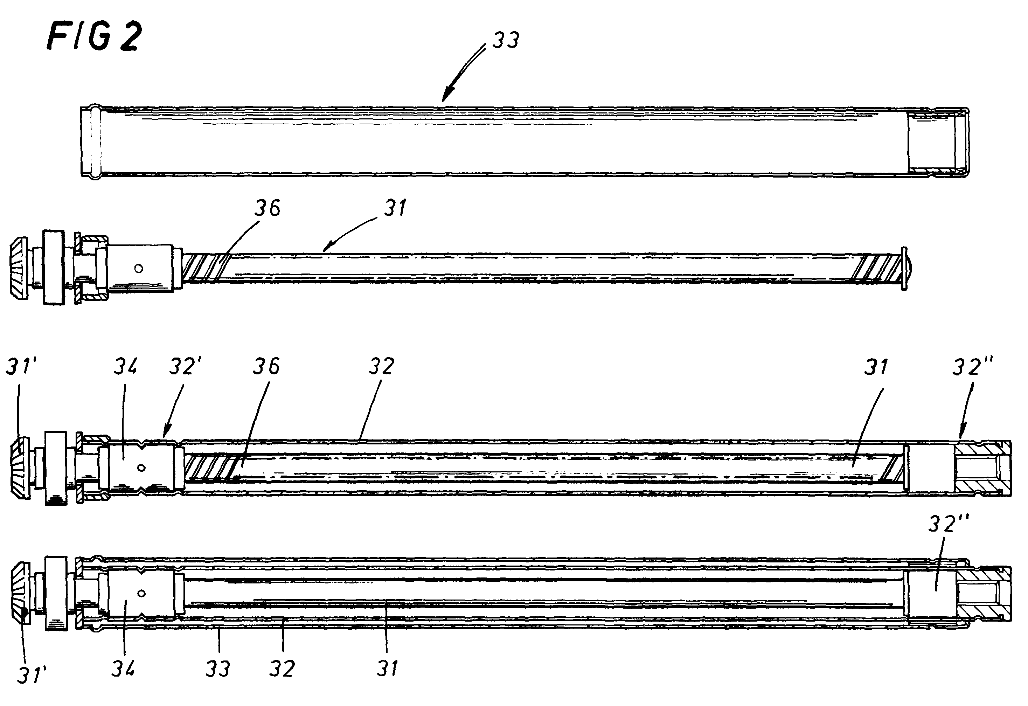

- figure 2 is a side view of the embodiment of the present invention as illustrated in figure 1, with some parts shown in cross-section and others cut away.

With reference to the accompanying drawings, an electromechanical linear actuator for driving wing closing systems is of the type used on doors or gates with a wing which moves about a vertical axis with respect to a fixed support, which is the supporting element for the wing (the wing and relative axis of rotation do not appear in the accompanying drawings).

The actuator includes a main body 2 with, on one side, means 21 for its connection, by a pivot, to the fixed support and, on the other, linear transmission means 3, of variable length.

The transmission means 3 include a tube 31 which rotates about its own longitudinal axis X, with a screw 36 that acts upon an element for connection 35 to the wing.

The connecting element 35 moves with respect to the actuator main body between two end positions, of maximum extension corresponding to the wing closed position, and minimum extension corresponding to the wing open position.

The actuator has drive means which drive the transmission means 3, the drive means 4 including a transmission shaft 41, freely pivoted to the actuator main body 2 and set at a right angle to the longitudinal axis X of the tube 31.

The transmission shaft 41 is meshed to the tube by a first 41' and second 31' toothed wheel, keyed respectively to the transmission shaft and the rotating tube.

The opposite end of the transmission shaft 41 has keying means 44 which can be detached from the drive means 4, the latter being parallel with the longitudinal axis X of the tube 31.

The detachable keying means 44 may, for example, consist of square fittings.

The rotating tube 31, the connecting element 35 and the second toothed wheel 31' are part of an independent transmission unit 3, which can be detached from the actuator main body 2.

This guarantees actuator modularity, allowing the easy repair or substitution of parts.

Moreover, the actuator main body 2 may have mountings 23 consisting of detachable clamping elements, designed to securely house the drive means 4, to further facilitate their substitution. The drive means 4 may be positioned above the actuator main body 2 and parallel with the longitudinal axis X of the tube 31, so as to limit the space occupied by the drive means.

The linear transmission means 3 also have a first hollow element 32 and a second hollow element 33, coaxially fitted to the rotating tube 31.

The first end 32' of the first hollow element 32 has means 34 for interaction with the rotating tube 31 screw 36, and the other end of the element has means for attachment to the wing connecting element 35.

The second hollow element 33 is a sheath designed to house the linear transmission means 3 when they are in the minimum extension position.

In the present invention, the connecting element 35 is connected to the rotating tube by the first hollow element 32, and is no longer directly fixed to the rotating tube screw, as occurred in the prior art.

The present invention, thus designed for the said objects, may be subject to numerous variations, all encompassed by the original design concept, and all components may be replaced with technically equivalent parts.

## Claims

1. An electromechanical linear actuator for driving wing closing systems of the type used on doors or gates with a wing which turns about a vertical axis with respect to a fixed support which is the supporting element for the wing, the actuator including a main body with, on one side, means for its connection, by a pivot, to the fixed support and, on the other, linear transmission means of variable length, including a tube which rotates about its own longitudinal axis and has a screw which acts upon an element for connection to the wing, the latter being mobile relative to the actuator main body between two end positions corresponding to the maximum extension - wing closed position, and the minimum extension - wing open position; the actuator also having drive means which drive the transmission means, characterised in that the said drive means (4) include a transmission shaft (41), freely pivoted to the actuator main body (2), set at a right angle to the longitudinal axis (X) of the tube (31) and meshed to the tube by means of a first (41') and second (31') toothed wheel, said wheels being keyed respectively to the transmission shaft and the rotating tube, the opposite end of the said transmission shaft (41) having keying means (44) which can be detached from the drive means (4), the latter being parallel with the longitudinal axis (X) of the tube (31).

2. The linear actuator as described in claim 1, characterised in that the rotating tube (31), the connecting element (35) and second toothed wheel (31') are part of an independent transmission unit (3) which can be detached from the actuator main body (2).

3. The linear actuator as described in claim 1, characterised in that the actuator main body (2) also has mountings (23) designed to securely house the drive means (4).

4. The linear actuator as described in claim 1, characterised in that the actuator main body (2) also has mountings (23) consisting of detachable clamping elements, designed to securely house the drive means (4).

5. The linear actuator as described in claim 1, characterised in that the drive means (4) are positioned above the actuator main body (2) and parallel with the longitudinal axis (X) of the tube (31).

6. The linear actuator as described in claim 1, characterised in that the linear transmission means (3) consist of a series of hollow elements (32, 33) fitted to the rotating tube (31), having means for interaction with the tube screw (36), and supporting at a free end (32'') the wing connecting element (35).

7. The linear actuator as described in claim 1, characterised in that the linear transmission means (3) also consist of a first hollow element (32) and a second hollow element (33) which are coaxially attached to the rotating tube (31); the first end (32') of the said first hollow element (32) having means (34) for interaction with the tube (31) screw (36), and the other end of the element having means for attachment to the wing connecting element (35); said second hollow element (33) forming a sheath to house the linear transmission means (3) when they are in the minimum extension position.
